# EUROPEAN PATENT APPLICATION

(11) **EP 4 611 091 A1**
(43) Date of publication of application: **03.09.2025**
(21) Application number: 23882774.5
(22) Date of filing: 27.10.2023
(51) Int. Cl.: H01M 10/052, H01M 10/0567, H01M 10/0568, H01M 10/0569

(54) **NON-AQUEOUS ELECTROLYTE SOLUTION AND LITHIUM-ION SECONDARY BATTERY USING SAME**

(30) Priority: 27.10.2022 JP 2022172432
(71) Applicant: Kyocera Corporation, Kyoto-shi, Kyoto 612-8501 (JP)
(72) Inventor: TODOKI, Hitomi, Kyoto-shi, Kyoto 612-8501 (JP); FUKUMITSU, Hitoshi, Kyoto-shi, Kyoto 612-8501 (JP); OGAWA, Ryohei, Kyoto-shi, Kyoto 612-8501 (JP); MATSUMURA, Ryo, Kyoto-shi, Kyoto 612-8501 (JP); ABE, Koji, Ube-shi, Yamaguchi 755-8611 (JP); TODOROV, Yanko Marinov, Ube-shi, Yamaguchi 755-8611 (JP)
(74) Representative: TBK
(86) International application number: PCT/JP2023/038965
(87) International publication number: WO 2024/090573

(57) **Abstract**

An object of the present disclosure is to provide a nonaqueous electrolytic solution and a lithium ion secondary battery using same, the nonaqueous electrolytic solution having both excellent battery safety when used at a high temperature, an important feature for secondary batteries to be installed in modern vehicles such as electric vehicles, and having excellent battery characteristics. The nonaqueous electrolytic solution of the present disclosure is a nonaqueous electrolytic solution including an electrolyte salt dissolved in a nonaqueous solvent, the nonaqueous solvent containing from 80 to 100 vol% in total of at least one selected from ethylene carbonate, propylene carbonate, and γ-butyrolactone, and the nonaqueous electrolytic solution further including a trifluoroacetic acid ester having an alcohol group with a carbon chain length of from 6 to 8.

## Description

### TECHNICAL FIELD

The present disclosure relates to a nonaqueous electrolytic solution having excellent battery safety when used at a high temperature and also having an initial capacity and cycle properties, and a lithium ion secondary battery using the nonaqueous electrolytic solution.

### BACKGROUND OF INVENTION

In recent years, lithium ion secondary batteries have been widely used not only as a power supply for compact size electronic devices but also as a power supply for electric vehicles and power storage. Although a lithium ion secondary battery mainly includes a positive electrode, a nonaqueous electrolytic solution, a separator, and a negative electrode, in particular, a lithium ion secondary battery including a lithium composite oxide containing Ni as the positive electrode and a carbon material or a titanium oxide as the negative electrode is preferably used. The electrolytic solution for such lithium ion secondary battery is preferably a combination of a cyclic carbonate and an open chain carbonate, with examples of the cyclic carbonate being ethylene carbonate (EC) and propylene carbonate (PC) and examples of the open chain carbonate being dimethyl carbonate (DMC), ethyl methyl carbonate (EMC), and diethyl carbonate (DEC).

As a power supply of a vehicle-mounted secondary battery such as an electric vehicle, a nonflammable all-solid electrolyte has attracted attention; however, the performance of the nonflammable all-solid electrolyte is still inferior. Thus, as a method for enhancing thermal stability of a vehicle-mounted secondary battery using a liquid-based electrolytic solution, there is a method of using EC, PC, and γ-butyrolactone (GBL) which are cyclic compounds having a high flash point for a nonaqueous electrolytic solution. However, since the nonaqueous electrolytic solution including only the cyclic compound has no impregnability of a polyolefin separator, the nonaqueous electrolytic solution does not operate as a battery, or the performance varies. When chain carbonate (DMC, EMC, DEC, etc.) is used in order to obtain impregnability of the polyolefin separator, there is a problem that the flash point of the entire electrolytic solution is lowered to about 25°C by being dragged by a low flash point of the chain carbonate.

Non-Patent Document 1 proposes an electrolytic solution obtained by adding trifluoroacetic acid ester to an EC/EMC electrolytic solution. In this case, since EMC as a chain carbonate is used, there is no problem in the impregnability of the polyolefin separator. As a result of focusing attention on the effect of a carbon chain length of the trifluoroacetic acid ester, Document 1 describes that since n-hexyl trifluoroacetate has a long carbon chain, a dissociation ability of LiPF6 is low, and methyl trifluoroacetate or ethyl trifluoroacetate in which the carbon chain length of an alcohol group of the trifluoroacetic acid ester is shortened is preferable in order to reduce mobility of solvated lithium ions.

In addition, as a method for enhancing the impregnability of the polyolefin separator, Patent Document 1 discloses that a 50 cycle discharge capacity retention ratio of the battery at 20°C can be improved by using an electrolytic solution obtained by adding a pivalic acid ester in which the number of carbon atoms of an alkyl group (R₄) bonded to an oxygen atom is from 4 to 20 to a nonaqueous solvent (for example, EC, PC, GBL). In Examples, it is described that pivalic acid esters such as butyl pivalate, hexyl pivalate, octyl pivalate, and decyl pivalate having an alcohol group with a carbon chain length of 4 or more have high affinity for the separator, and a microporous separator quickly penetrates into a porous structure of the separator, leading to reduction of a manufacturing time in a manufacturing process of the lithium ion secondary battery. However, in the known technique disclosed in Patent Document 1, a viscosity of octyl pivalate (R₄ = n-octyl group) at 25°C is at 2.5 cP, which is higher than that of GBL (viscosity 1.8 cP) having the lowest viscosity among cyclic compounds used as a main solvent, and there is a concern about deterioration of battery characteristics associated with an increase in viscosity.

### CITATION LIST

### PATENT LITERATURE

Patent Document 1: JP 4691871 B

### NON-PATENT LITERATURE

Non-Patent Document 1: Journal of Fluorine Chemistry, 156, 136-143 (2013)

### SUMMARY

A nonaqueous electrolytic solution according to an aspect of the present disclosure is a nonaqueous electrolytic solution including an electrolyte salt dissolved in a nonaqueous solvent, wherein the nonaqueous solvent contains from 80 to 100 vol% in total of at least one selected from ethylene carbonate, propylene carbonate, and γ-butyrolactone, and the nonaqueous electrolytic solution further including a trifluoroacetic acid ester having an alcohol group with a carbon chain length of from 6 to 8.

A lithium ion secondary battery according to an aspect of the present disclosure is a lithium ion secondary battery including a positive electrode, a negative electrode, a polyolefin separator, and a nonaqueous electrolytic solution containing an electrolyte salt in a nonaqueous solvent, the nonaqueous electrolytic solution being the nonaqueous electrolytic solution according to an aspect of the present disclosure.

### BRIEF DESCRIPTION OF THE DRAWINGS

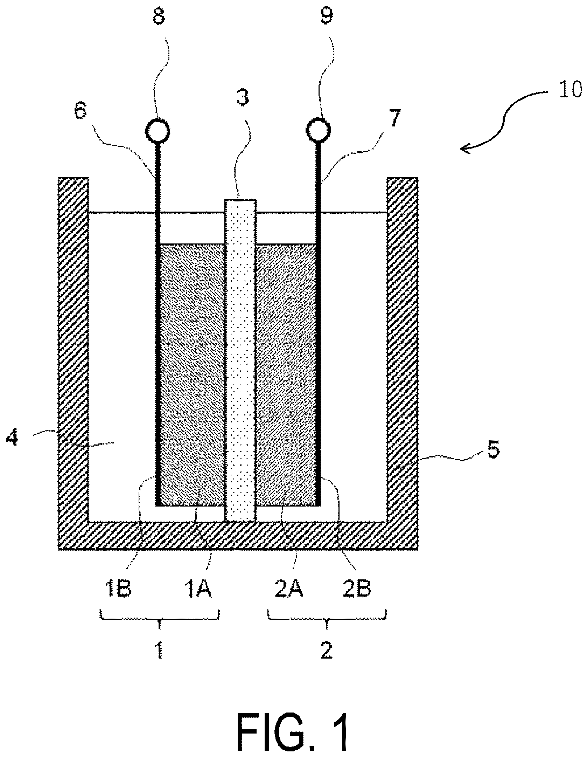

FIG. 1 is a cross-sectional view illustrating a structure of a lithium ion secondary battery.

### DESCRIPTION OF EMBODIMENTS

An object of the present disclosure is to provide a nonaqueous electrolytic solution having both excellent battery safety when used at a high temperature, which is important for recent vehicle-mounted secondary battery such as electric vehicles, and excellent battery characteristics, and a lithium ion secondary battery using the nonaqueous electrolytic solution.

A nonaqueous electrolytic solution of the present disclosure is a nonaqueous electrolytic solution including an electrolyte salt dissolved in a nonaqueous solvent, in which the nonaqueous solvent contains from 80 to 100 vol% in total of at least one selected from ethylene carbonate (EC), propylene carbonate (PC), and γ-butyrolactone (DMC), and the nonaqueous electrolytic solution further includes a trifluoroacetic acid ester having an alcohol group with a carbon chain length of from 6 to 8. EC has a flash point of 143°C, PC has a flash point of 133°C, and they are cyclic carbonates having a flash point of 80°C or higher. GBL has a flash point of 100°C, and is a cyclic compound having a flash point of 80°C or higher. In the present disclosure, the nonaqueous solvent contains from 80 to 100 vol% in total of at least one selected from EC, PC, and GBL. Containing from 80 to 100 vol% in total means that when only one selected from EC, PC, and GBL is contained, from 80 to 100 vol% of the selected one is contained, and when two or more selected from EC, PC, and GBL are contained, from 80 to 100 vol% in total of the selected two is contained. The vol% is a ratio to the volume of the entire nonaqueous solvent. In the present disclosure, the nonaqueous solvent preferably contains from 90 to 100 vol% in total of at least one selected from EC, PC, and GBL. The nonaqueous solvent preferably contains two or more selected from EC, PC, and GBL. A volume ratio of EC to PC in the nonaqueous solvent is preferably EC/PC = from 10/90 to 100/0, more preferably from 50/50 to 90/10, and still more preferably from 60/40 to 80/20. Since EC has a melting point of 36°C and is solid at normal temperature, when the ratio of EC increases, precipitation of EC is likely to occur at low temperature, and low-temperature characteristics may deteriorate. In addition, when the ratio of PC increases, ionic conductivity of the nonaqueous electrolytic solution may decrease. Thus, when a mixing ratio of EC is made higher than PC, it is preferable to add GBL, and the volume ratio of (EC + PC)/GBL is preferably from 0/100 to 100/0, more preferably from 20/80 to 70/30, and still more preferably from 30/70 to 50/50.

The nonaqueous electrolytic solution of the present disclosure may contain a nonaqueous solvent other than EC, PC, and GBL. Even when the nonaqueous electrolytic solution of the present disclosure contains a nonaqueous solvent other than EC, PC, and GBL, the flash point is preferably 80°C or higher, and more preferably 100°C or higher. In addition, a cyclic compound having a flash point of 80°C or higher other than EC, PC, and GBL may be contained. Examples of the cyclic compound include fluoroethylene carbonate (FEC, flash point: 122°C), vinylene carbonate (VC, flash point: 80°C), succinic anhydride (SA, flash point: 157°C), maleic anhydride (MA, flash point: 102°C), 1,3-propane sultone (PS, flash point: > 110°C), and ethylene sulfate (ES, flash point: > 100°C). When PC and GBL are used, it is preferable to use one or more kinds selected from these six kinds, and it is preferable to add PC and GBL in a range of 1 wt.% or more and 10 wt.% or less in total with respect to the nonaqueous electrolytic solution. The nonaqueous electrolytic solution of the present disclosure may or may not contain each chain carbonate of DMC, EMC, DEC and dibutyl carbonate (DBC) as the nonaqueous solvent, and when the nonaqueous electrolytic solution contains the chain carbonate, the total content thereof is preferably 5 vol% or less with respect to the volume of the entire nonaqueous solvent.

The nonaqueous electrolytic solution of the present disclosure contains a trifluoroacetic acid ester having an alcohol group with a carbon chain length of from 6 to 8. The carbon chain length of the alcohol group being from 6 to 8 means that the number of carbon atoms derived from alcohol in the trifluoroacetic acid ester is from 6 to 8. The content of the trifluoroacetic acid ester having an alcohol group with a carbon chain length of from 6 to 8 is preferably from 0.1 to 5 mass%, preferably from 0.1 to 4 mass%, still more preferably from 0.1 to 3 mass% with respect to a total mass of the nonaqueous electrolytic solution.

The trifluoroacetic acid ester according to the present disclosure is not particularly limited as long as it is a trifluoroacetic acid ester having an alcohol group with a carbon chain length of from 6 to 8. When the number of carbon atoms is 5 or less, the impregnability (permeability) to the separator is insufficient, and thus battery performance deteriorates. When the number of carbon atoms is 9 or more, the viscosity increases, and thus the battery performance is deteriorated. Examples of the trifluoroacetic acid ester having an alcohol group with a carbon chain length of from 6 to 8 in the present disclosure include n-hexyl trifluoroacetate, n-heptyl trifluoroacetate, and n-octyl trifluoroacetate as linear esters, and 2-ethylhexyl trifluoroacetate, 2-octyl trifluoroacetate, 3-octyl trifluoroacetate, and 4-octyl trifluoroacetate as branched esters. One kind or two or more kinds selected from these are preferable, and one kind or two or more kinds selected from n-hexyl trifluoroacetate, n-heptyl trifluoroacetate, and 2-ethylhexyl trifluoroacetate are more preferable.

The pivalic acid ester added to the nonaqueous electrolytic solution of the present disclosure is not particularly limited as long as it is a pivalic acid ester having an alcohol group with a carbon chain length of from 6 to 8. The carbon chain length of the alcohol group being from 6 to 8 means that the number of carbon atoms derived from alcohol in the pivalic acid ester is from 6 to 8. When the number of carbon atoms is 5 or less, the permeability to the separator is insufficient, and thus battery performance deteriorates. In addition, in the case of a hydrocarbon group having 9 or more carbon atoms, since the viscosity increases, low-temperature battery performance deteriorates. The content of the pivalic acid ester having an alcohol group with a carbon chain length of from 6 to 8 is preferably from 0.1 to 5 mass%, preferably from 0.1 to 4 mass%, still more preferably from 0.1 to 3 mass% with respect to a total mass of the nonaqueous electrolytic solution. Preferred pivalic acid esters in the present disclosure include n-hexyl pivalate, n-heptyl pivalate, and n-octyl pivalate as linear esters, and 2-ethylhexyl pivalate, 2-octyl pivalate, 3-octyl pivalate, and 4-octyl pivalate as branched esters. One kind or two or more kinds selected from these are preferable, and one kind or two or more kinds selected from n-hexyl pivalate, n-heptyl pivalate, and 2-ethylhexyl pivalate are preferable.

In the nonaqueous electrolytic solution of the present disclosure, when the added amounts of the trifluoroacetic acid ester and the pivalic acid ester are large, there is a possibility that the permeability into the separator is excessive and the cycle properties are deteriorated, and thus it is preferable that the added amount is as small as possible. If the added amount is too small, the permeability of the separator becomes insufficient, so that a battery capacity may be reduced. Thus, in the present disclosure, in the added amount when the trifluoroacetic acid ester and the pivalic acid ester are used in combination, the total content of the trifluoroacetic acid ester and the pivalic acid ester is preferably from 0.5 to 5 mass% with respect to the total mass of the nonaqueous electrolytic solution.

When the trifluoroacetic acid ester and the pivalic acid ester are used in combination, the addition ratio thereof is not limited as long as a total viscosity of the trifluoroacetic acid ester and the pivalic acid ester at 25°C is not more than 1.8 cP, and the trifluoroacetic acid ester and the pivalic acid ester can be used in combination. In particular, a pivalic acid ester having an alcohol group with a carbon chain length of from 6 to 8 has a higher viscosity than that of a trifluoroacetic acid ester, and is preferable because the ability to dissociate lithium ions is enhanced and the battery performance is improved.

When a graphite negative electrode is used for a battery, in order to suppress reductive decomposition of PC and GBL on the graphite negative electrode, it is preferable to add chain 2-propynyl methanesulfonate (PMS, flash point: 124°C) to the nonaqueous solvent. These compounds are preferably added in a range of from 0.1 wt.% to 5 mass% relative to the entire nonaqueous electrolytic solution.

The electrolyte salt in the present disclosure is not particularly limited as long as it can be used for an electrolytic solution of a lithium ion secondary battery, and examples thereof include LiN(SO₂F)₂, LiN(SO₂CF₃)₂, LiPF₆, LiBF₄, LiB(C₂O₄)₂, LiBF₂(C₂O₄), and LiPF₂(C₂O₄). LiN(SO₂F)₂ is preferable because it has high chemical thermal stability and can improve battery performance at a high temperature. Also, the addition of a certain amount of LiPF₆ is preferable because LiPF₆ has an effect of facilitating improvement of battery performance at a low temperature. The reason is inferred to be that movement of Li ions in the vicinity of the separator becomes smoother. The total concentration of the electrolyte salt contained in the nonaqueous solvent is preferably from 0.5 to 3 mol/L (that is, from 0.5 to 3 mol of the electrolyte salt per 1 L of the nonaqueous solvent), and more preferably from 1 to 2 mol/L. In addition, in using LiN(SO₂F)₂ alone, and in using LiN(SO₂F)₂ and LiPF₆ in combination, LiN(SO₂F)₂/LiPF₆ as the weight ratio of LiN(SO₂F)₂ to LiPF₆ is preferably in a range of, for example, from 100/0 to 0/100, from 90/10 to 50/50, or from 80/20 to 70/30. The nonaqueous electrolytic solution of the present disclosure preferably contains at least one selected from fluoroethylene carbonate (FEC, flash point: 122°C), vinylene carbonate (VC, flash point: 80°C), succinic anhydride (SA, flash point: 157°C), maleic anhydride (MA, flash point: 102°C), 1,3-propane sultone (PS, flash point > 110°C), ethylene sulfate (ES, flash point > 100°C), LiBF₂(C₂O₄), LiB(C₂O₄)₂, and 2-propynyl methanesulfonate in a total amount of 1 to 10 mass% with respect to the total mass of the nonaqueous electrolytic solution. By containing these, the battery characteristics are further improved. The nonaqueous electrolytic solution of the present disclosure can be produced by dissolving an electrolyte, and a trifluoroacetic acid ester having an alcohol group with a carbon chain length of from 6 to 8, and/or a pivalic acid ester having an alcohol group with a carbon chain length of from 6 to 8 in a nonaqueous solvent.

In the present disclosure, the separator is not limited as long as it is a separator that can be used in a lithium ion secondary battery. The separator is most preferably a separator including a microporous film formed of a polyolefin material such as polypropylene or polyethylene, but may also be a non-woven fabric separator. These may have a single-layer structure or a multi-layer structure, and the surface of the separator may be coated with an oxide such as alumina. A thickness of the separator is preferably as thin as possible in order to increase a volume energy density of the battery and improve the permeability of the electrolytic solution. Therefore, the thickness of the separator is preferably 20 µm or less, and more preferably 10 µm or less.

In the present disclosure, the negative electrode is not limited as long as it can be used in a lithium ion secondary battery. In order to increase the volume energy density, the negative electrode is preferably, for example, a graphite material such as natural graphite or artificial graphite, or a carbon material such as hard carbon or soft carbon. In addition, in order to improve fast charge/discharge, the negative electrode is preferably a titanium oxide that does not expand or contract during charge/discharge, with examples thereof being a titanium oxide having a spinel structure such as Li₄Ti₅O₁₂ and a titanium oxide such as TiNb₂O₇ and Ti₂Nb₁₀O₂₉, and particularly preferably a titanium oxide having a spinel structure such as Li₄Ti₅O₁₂.

A negative electrode mixture material is obtained by kneading the negative electrode active material and a binder such as ethylene propylene diene terpolymer (EPDM), polytetrafluoroethylene (PTFE), polyvinylidene fluoride (PVDF), a copolymer of styrene and butadiene (SBR), a copolymer of acrylonitrile and butadiene (NBR), or carboxymethyl cellulose (CMC).

In the present disclosure, examples of a positive electrode active material of the positive electrode include LiCoO₂, LiNiO₂, LiCo_{1/3}Ni_{1/3}Mn_{1/3}O₂, LiCo_{0.15}Ni_{0.8}Al_{0.05}O₂, LiNi_{0.5}Co_{0.2}Mn_{0.3}O₂ (NCM523), LiNi_{0.8}Co_{0.2}O₂, and LiNi_{0.5}Mn_{1.5}O₄. In order to increase the volume energy density, the positive electrode active material containing a lithium composite oxide with an atomic ratio of Ni of 50% or more is preferably LiNi_{0.5}Co_{0.2}Mn_{0.3}O₂, LiNi_{0.6}Co_{0.2}Mn_{0.2}O₂, LiNi_{0.8}Co_{0.1}Mn_{0.1}O₂, and LiCo_{0.15}Ni_{0.80}Al_{0.05}O₂. In addition, in order to improve fast charge/discharge, the positive electrode active material is preferably LiMn₂O₄ having a spinel structure or LiFePO₄ having an olivine structure.

A positive electrode mixture material may have a known or commercially available conductive auxiliary agent such as acetylene black, Ketjen black, or another carbon black, carbon nanotubes, carbon fibers, activated carbon, and graphite used in the positive electrode active material. The positive electrode mixture material is prepared by kneading the positive electrode active material and a binder such as polytetrafluoroethylene (PTFE), polyvinylidene fluoride (PVFF), a copolymer of styrene and butadiene (SBR), a copolymer of acrylonitrile and butadiene (NBR), or carboxymethyl cellulose (CMC) to produce a positive electrode mixture in the form of a slurry, applying this positive electrode material to an aluminum foil serving as a current collector, subjecting the resulting product to drying and compression molding and then heat treatment at 80°C under vacuum, for example.

As the combination of the positive electrode mixture material and the negative electrode mixture material used in the present disclosure, the above-mentioned combination is a preferred example for increasing the volume energy density or for improving fast charge/discharge, and a battery can be produced accordingly.

In an embodiment of the present disclosure, the current collector used is not limited, but is usually an aluminum foil or a copper foil, and can be a porous current collector which further improves the permeability of the electrolytic solution.

In the present disclosure, the solvent used in the binder is also not particularly limited, and various solvents can be selected depending on the active material or the binder to be used. Specifically, when the binder is PVDF, the solvent is preferably N-methyl-2-pyrrolidone. Meanwhile, when the binder is a rubber-based binder such as styrene butadiene rubber (SBR), polytetrafluoroethylene, polyvinyl alcohol, or carboxymethyl cellulose (CMC), the solvent is suitably water.

In the present disclosure, the structure of the lithium ion secondary battery is not particularly limited, and a shape of the secondary battery including a positive electrode, a negative electrode, and a separator may include, for example, a coin battery, a cylindrical battery, a prismatic battery, or a pouch battery. In the present disclosure, the lithium ion secondary battery can be produced by assembling the positive electrode, the negative electrode, and the separator described above according to the structure described above and injecting the nonaqueous electrolytic solution described above into the separator.

An example of a structure of a lithium ion secondary battery will be described with reference to FIG. 1. FIG. 1 is a cross-sectional view illustrating a structure of a lithium ion secondary battery 10. The lithium ion secondary battery 10 includes a positive electrode 1, a negative electrode 2, a separator 3, a nonaqueous electrolytic solution 4, and a case 5 in which the positive electrode 1, the negative electrode 2, the separator 3, and the nonaqueous electrolytic solution 4 are housed. The positive electrode 1 is an electrode in which a positive electrode active material layer 1A containing a positive electrode active material is coated on a surface of a positive electrode current collector 1B. The negative electrode 2 is an electrode in which a negative electrode active material layer 2A containing a negative electrode active material is coated on a surface of a negative electrode current collector 2B.

In addition, the positive electrode 1 is electrically connected to a positive electrode side external terminal 8 via a lead 6. The negative electrode 2 is electrically connected to a negative electrode side external terminal 9 via a lead 7. The separator 3 is disposed between the positive electrode 1 and the negative electrode 2. That is, the lithium ion secondary battery 10 has a structure in which the positive electrode 1 and the negative electrode 2 are stacked with the separator 3 interposed therebetween. The case 5 houses the positive electrode 1, the negative electrode 2, and the separator 3, is filled with the nonaqueous electrolytic solution 4, and is provided with a lid (not shown) for maintaining airtightness.

The present disclosure is not limited to each of the embodiments described above, and various modifications can be made within the scope indicated by the claims, and an embodiment obtained by appropriately combining technical means disclosed in different embodiments is also included in the technical scope of the present disclosure.

### EXAMPLES

Hereinafter, the present disclosure will be specifically explained with reference to Examples, but the technical scope of the present disclosure is not limited to these examples.

### (Method for measuring viscosity)

The mechanism of the viscometer used was rotational. The model was VISCOMETER DVI PrimeLV (available from Brookfield), and the viscosity of the trifluoroacetic acid ester used in Examples 1 and 2 and the viscosity of the mixture of the trifluoroacetic acid ester and the pivalic acid ester used in Examples 3 to 12 were measured under a condition of 25°C. The viscosity was measured five times, and the average value thereof was listed as the viscosity in Table 1.

### (Preparation of electrolytic solution)

### [Example 1]

In a nonaqueous solvent mixed at EC/PC/GBL = 2/1/7 (volume ratio), 0.5 mol/L of LiPF6 and 0.5 mol/L of LiN(SO₂F)₂(LiFSI) were dissolved. To the solution thus obtained, 3 mass% of n-hexyl trifluoroacetate was added to prepare an electrolytic solution of Example 1. The added amount (3 mass%) of n-hexyl trifluoroacetate represents a ratio with respect to the mass of the entire prepared electrolytic solution. In addition, the mol/L of the electrolyte represents each ratio with respect to the volume of the entire prepared electrolytic solution.

### [Examples 2 to 12]

Electrolytic solutions of Examples 2 to 12 were prepared in the same manner as in Example 1 except that the contents of trifluoroacetic acid ester and pivalic acid ester were adjusted as indicated in Table 1. The added amount (mass%) of the trifluoroacetic acid ester and the pivalic acid ester in Table 1 represents a ratio with respect to the mass of the entire prepared electrolytic solution.

### [Comparative Example 1]

In Comparative Example 1, an electrolytic solution was prepared in the same manner as in Example 1 except that trifluoroacetic acid ester and pivalic acid ester were not added.

### (Production of lithium ion secondary battery (LIB) and measurement of battery characteristics)

93 mass% of NCM523 (positive electrode active material), 3 mass% of acetylene black (conductive auxiliary agent), and 4 mass% of polyvinylidene fluoride (binder) were mixed, and 1-methyl-2-pyrrolidone was added to the mixture to prepare a positive electrode mixture material in the form of a slurry. Then, the positive electrode mixture material was applied onto an aluminum foil. Thereafter, the resulting product was dried and press-molded to prepare a positive electrode. Similarly, 98 mass% of artificial graphite (negative electrode active material), 1 mass% of a copolymer of styrene and butadiene as a binder, and 1 mass% of carboxymethyl cellulose were added to water and mixed to prepare a negative electrode mixture material in the form of a slurry. Then, the negative electrode mixture material was applied onto a copper foil. Thereafter, the resulting product was dried, press-molded and heat-treated to prepare a negative electrode sheet. The separator was a 20-micron microporous film having three layers, with a layer of polyethylene being sandwiched between two layers of polypropylene. The electrolytic solution of each of Examples 1 to 12 and Comparative Example 1 was injected to produce a coin battery (coin-type LIB having a diameter of 20 mm and a thickness of 3.2 mm).

The coin battery was charged to an upper limit voltage of 4.2 V at a 1C rate of constant current and constant voltage at 25°C and then discharged to a lower limit voltage of 3.0 V at a 1C rate using a charge/discharge device ACD-MO1A (available from Aska Electronic Co., Ltd.) to repeat charge/discharge. The cycle properties (%) were quantified as: the obtained capacities (mAh/g) at 50th cycle/1st cycle × 100. The discharge capacity (initial capacity) at the first cycle was calculated as a relative ratio to the discharge capacity at the first cycle of an electrolytic solution in which 0.5 mol/L of LiPF₆ and 0.5 mol/L of LiFSI were dissolved in a nonaqueous solvent mixed at EC/DMC = 1:2 (volume ratio). The results are listed in Table 1.

**[Table 1]**

| | Various esters | Added amount (mass%) | Viscosity (cP) | Initial capacity | Cycle (%) |
|---|---|---|---|---|---|
| Example 1 | n-Hexyl trifluoroacetate | 3 | 1.0 | 0.94 | 93 |
| Example 2 | Trifluoroacetic acid 2- ethylhexyl | 1.5 | 1.2 | 0.95 | 95 |
| Example 3 | n-Hexyl trifluoroacetate | 1 | 1.8 | 0.98 | 99 |
| | n-Heptyl pivalate | 2 | | | |
| Example 4 | n-Hexyl trifluoroacetate | 1 | 1.8 | 0.98 | 98 |
| | 2-Ethylhexyl pivalate | 2 | | | |
| Example 5 | n-Hexyl trifluoroacetate | 1 | 1.8 | 0.97 | 97 |
| | 2-Octyl pivalate | 2 | | | |
| Example 6 | n-Heptyl trifluoroacetate | 1 | 1.5 | 0.99 | 97 |
| | n-Hexyl pivalate | 2 | | | |
| Example 7 | n-Octyl trifluoroacetate | 2 | 1.6 | 0.96 | 96 |
| | n-Hexyl pivalate | 0.5 | | | |
| Example 8 | n-Hexyl trifluoroacetate | 2 | 1.3 | 0.95 | 82 |
| | n-Octyl pivalate | 0.5 | | | |
| Example 9 | Trifluoroacetic acid 2- ethylhexyl | 0.3 | 1.4 | 0.93 | 91 |
| | n-Hexyl pivalate | 0.2 | | | |
| Example 10 | n-Hexyl trifluoroacetate | 3 | 1.3 | 0.97 | 94 |
| | n-Hexyl pivalate | 2 | | | |
| Example 11 | n-Hexyl trifluoroacetate | 3 | 1.0 | 0.95 | 96 |
| | n-Hexyl pivalate | 0.1 | | | |
| Comparative Example 1 | None | 0 | 0 | No charge/discharge | |
| Example 12 | n-Hexyl trifluoroacetate | 0.5 | 2.4 | 0.93 | 69 |
| | n-Octyl pivalate | 4.5 | | | |

The nonaqueous electrolytic solution of Comparative Example 1 containing no trifluoroacetic acid ester in the present disclosure did not penetrate the separator, and charge/discharge was not possible on the coin battery produced using the nonaqueous electrolytic solution. On the other hand, for the nonaqueous electrolytic solutions of all Examples containing trifluoroacetic acid ester in the present disclosure penetrated the separator, and the coin battery produced using these, not only charge/discharge was possible, but also excellent cycle properties were confirmed. In addition, by using the trifluoroacetic acid ester and the pivalic acid ester in combination in the present disclosure, more excellent cycle properties were obtained (Examples 3 to 7 and 11), and equivalent cycle properties were obtained even when the content of the trifluoroacetic acid ester was reduced (Examples 8 and 9). In Example 10, the initial capacity was improved.

As described above, since the electrolytic solution containing a trifluoroacetic acid ester and the electrolytic solution containing a trifluoroacetic acid ester and a pivalic acid ester of the present disclosure have low viscosity and excellent permeability into a separator, it has also been found that the electrolytic solution quickly permeates into a microporous separator in an electrolytic solution injection step in a mass production process of the lithium ion secondary battery, and a manufacturing time of the lithium ion secondary battery can be shortened.

### [Preparation of electrolytic solution]

### [Example 13]

In a nonaqueous solvent mixed at EC/PC/GBL = 2/1/7 (volume ratio), 0.5 mol/L of LiPF6 and 0.5 mol/L of LiN(SO₂F)₂(LiFSI) were dissolved. To the solution thus obtained, 2 mass% of fluoroethylene carbonate (FEC), 1 mass% of succinic anhydride (SA), and 2 mass% of LiBF₂(C₂O₄) (LiDFOB) were added to the electrolytic solution of Example 8 in which 2 mass% of n-hexyl trifluoroacetate and 0.5 mass% of n-octyl pivalate were mixed and added. A lithium ion secondary battery (LIB) was prepared in the same manner as in Example 8, and the battery characteristics were measured by performing a charge/discharge test. The results are listed in Table 2.

### [Example 14]

A charge/discharge test was performed in the same manner as in Example 13 except that FEC of Example 13 was replaced with 2 mass% of vinylene carbonate (VC), SA was replaced with 1 mass% of maleic anhydride (MA), and LiDFOB was replaced with 2 mass% of LiB(C₂O₄)₂ (LiBOB). The results are listed in Table 2.

### [Example 15]

A charge/discharge test was performed in the same manner as in Example 13 except that FEC in Example 13 was replaced with 2 mass% of 1,3-propane sultone (PS), SA was replaced with 1 mass% of ethylene sulfate (ES), and LiDFOB was replaced with 2 mass% of 2-propynyl methanesulfonate (PMS). The results are listed in Table 2.

**[Table 2]**

| | Initial capacity | Cycle (%) |
|---|---|---|
| Example 8 | 0.95 | 82 |
| Example 13 | 0.98 | 97 |
| Example 14 | 0.99 | 99 |
| Example 15 | 0.98 | 99 |

As a result of Table 2, it was found that more excellent results were obtained by adding FEC, VC, SA, MA, LiDFOB, LiBOB, PS, ES or PMS to the nonaqueous electrolytic solution. The above indicates that the lithium ion secondary battery using the nonaqueous electrolytic solution of the present disclosure not only has excellent safety during use at a high temperature but also is excellent in the initial capacity and the cycle properties.

### INDUSTRIAL APPLICABILITY

The use of the nonaqueous electrolytic solution of the present disclosure in the production of lithium ion secondary batteries can yield lithium ion secondary batteries having excellent battery safety during use at a high temperature and excellent initial characteristics and cycle properties. The contribution of this disclosure to the industry is immeasurable.

### REFERENCE SIGNS

1 Positive electrode
1A Positive electrode active material layer
1B Positive electrode current collector
2 Negative electrode
2A Negative electrode active material layer
2B Negative electrode current collector
3 Separator
4 Nonaqueous electrolytic solution
5 Case
6 Lead
7 Lead
8 Positive electrode side external terminal
9 Negative electrode side external terminal
10 Lithium ion secondary battery

## Claims

1. A nonaqueous electrolytic solution comprising:
an electrolyte salt dissolved in a nonaqueous solvent; the nonaqueous solvent comprising from 80 to 100 vol% in total of at least one selected from ethylene carbonate, propylene carbonate, and γ-butyrolactone; and
a trifluoroacetic acid ester having an alcohol group with a carbon chain length of from 6 to 8.

2. The nonaqueous electrolytic solution according to claim 1, comprising from 0.1 to 5 mass% of the trifluoroacetic acid ester having an alcohol group with a carbon chain length of from 6 to 8.

3. The nonaqueous electrolytic solution according to claim 1, wherein the trifluoroacetic acid ester having an alcohol group with a carbon chain length of from 6 to 8 is at least one selected from n-hexyl trifluoroacetate, 2-ethylhexyl trifluoroacetate, n-heptyl trifluoroacetate, n-octyl trifluoroacetate, 2-octyl trifluoroacetate, 3-octyl trifluoroacetate, and 4-octyl trifluoroacetate.

4. The nonaqueous electrolytic solution according to claim 1, comprising from 0.1 to 5 mass% of the trifluoroacetic acid ester having an alcohol group with a carbon chain length of from 6 to 8, and from 0.1 to 5 mass% of a pivalic acid ester having a carbon chain length of from 6 to 8.

5. The nonaqueous electrolytic solution according to claim 4, wherein the pivalic acid ester having a carbon chain length of from 6 to 8 is at least one selected from n-hexyl pivalate, 2-ethylhexyl pivalate, n-heptyl pivalate, n-octyl pivalate, 2-octyl pivalate, 3-octyl pivalate, and 4-octyl pivalate.

6. The nonaqueous electrolytic solution according to any one of claims 1 to 5, comprising from 1 to 10 mass% in total of at least one selected from fluoroethylene carbonate, vinylene carbonate, succinic anhydride, maleic anhydride, 1,3-propane sultone, ethylene sulfate, LiBF₂(C₂O₄), LiB(C₂O₄)₂, and 2-propynyl methanesulfonate.

7. A lithium ion secondary battery, comprising a positive electrode, a negative electrode, a polyolefin separator, and a nonaqueous electrolytic solution comprising an electrolyte salt in a nonaqueous solvent, the nonaqueous electrolytic solution being the nonaqueous electrolytic solution according to any one of claims 1 to 6.

## Amended claims

### Amended claims under Art. 19.1 PCT

1. [Amended] A nonaqueous electrolytic solution comprising an electrolyte salt dissolved in a nonaqueous solvent, the nonaqueous solvent comprising at least one selected from ethylene carbonate, propylene carbonate, and γ-butyrolactone, and the nonaqueous electrolytic solution further comprising a trifluoroacetic acid ester having an alcohol group with a carbon chain length of from 6 to 8.

2. [Amended] The nonaqueous electrolytic solution according to claim 1, wherein the nonaqueous solvent comprises from 80 to 100 vol% in total of at least one selected from ethylene carbonate, propylene carbonate, and γ-butyrolactone.

3. [Amended] The nonaqueous electrolytic solution according to claim 1 or 2, comprising from 0.1 to 5 mass% of the trifluoroacetic acid ester having an alcohol group with a carbon chain length of from 6 to 8.

4. [Amended] The nonaqueous electrolytic solution according to claim 1 or 2, wherein the trifluoroacetic acid ester having an alcohol group with a carbon chain length of from 6 to 8 is at least one selected from n-hexyl trifluoroacetate, 2-ethylhexyl trifluoroacetate, n-heptyl trifluoroacetate, n-octyl trifluoroacetate, 2-octyl trifluoroacetate, 3-octyl trifluoroacetate, and 4-octyl trifluoroacetate.

5. [Amended] The nonaqueous electrolytic solution according to claim 1 or 2, comprising from 0.1 to 5 mass% of the trifluoroacetic acid ester having an alcohol group with a carbon chain length of from 6 to 8, and from 0.1 to 5 mass% of a pivalic acid ester having a carbon chain length of from 6 to 8.

6. [Amended] The nonaqueous electrolytic solution according to claim 5, wherein the pivalic acid ester having a carbon chain length of from 6 to 8 is at least one selected from n-hexyl pivalate, 2-ethylhexyl pivalate, n-heptyl pivalate, n-octyl pivalate, 2-octyl pivalate, 3-octyl pivalate, and 4-octyl pivalate.

7. [Amended] The nonaqueous electrolytic solution according to any one of claims 1 to 6, comprising from 1 to 10 mass% in total of at least one selected from fluoroethylene carbonate, vinylene carbonate, succinic anhydride, maleic anhydride, 1,3-propane sultone, ethylene sulfate, LiBF₂(C₂O₄), LiB(C₂O₄)₂, and 2-propynyl methanesulfonate.

8. [Newly added] A lithium ion secondary battery, comprising a positive electrode, a negative electrode, a polyolefin separator, and a nonaqueous electrolytic solution comprising an electrolyte salt in a nonaqueous solvent, the nonaqueous electrolytic solution being the nonaqueous electrolytic solution according to any one of claims 1 to 7.
